Europäisches Patentamt

European Patent Office

Office européen des brevets

(19)

(11) Veröffentlichungsnummer: **0 021 080**
**B1**

(12) # EUROPÄISCHE PATENTSCHRIFT

(45) Veröffentlichungstag der Patentschrift:
**23.02.83**

(51) Int. Cl.³: **E 05 D 15/58**

(21) Anmeldenummer: **80102961.2**

(22) Anmeldetag: **28.05.80**

(54) **Hebe-Schiebe-Kipp-Tür oder -Fenster.**

(30) Priorität: **28.06.79 DE 2926113**

(43) Veröffentlichungstag der Anmeldung:
**07.01.81 Patentblatt 81/1**

(45) Bekanntmachung des Hinweises auf die Patenterteilung:
**23.02.83 Patentblatt 83/8**

(84) Benannte Vertragsstaaten:
**CH FR GB LI NL**

(56) Entgegenhaltungen:
**EP-A-0 005 764**
**FR-A-2 170 718**
**FR-A-2 321 030**
**FR-A-2 330 836**
**FR-A-2 339 727**

(73) Patentinhaber: **Gretsch-Unitas GmbH Baubeschlagfabrik, Johann-Maus-Strasse 3, D-7257 Ditzingen (DE)**

(72) Erfinder: **Maus, Julius, Gausstrasse 111, D-7000 Stuttgart 1 (DE)**

(74) Vertreter: **Schmid, Berthold et al, Patentanwälte Dipl.-Ing. B. Schmid Dr. Ing. G. Birn Falbenhennenstrasse 17, D-7000 Stuttgart 1 (DE)**

Hebe-Schiebe-Kipp-Tür oder -Fenster

Die Erfindung bezieht sich auf eine Hebe-Schiebe-Kipp-Tür oder -Fenster mit einem in der Schliess- sowie in der Kippstellung gegen Verschieben verriegelbaren Flügel. Eine derartige Tür ist bereits vorgeschlagen worden (EP-A-0 005 764). Der Flügel kann dort allerdings nur in gekippter Stellung und nach vorheriger Auslösung mittels eines vom normalen Umschaltmechanismus getrennten Auslösemechanismus verschoben werden. Dieser getrennte Auslösemechanismus bedeutet einen zusätzlichen Aufwand und ausserdem haben Fenster oder Türen mit zwei getrennten Betätigungsmechanismen und damit auch zwei Betätigungsorganen zwangsläufig einen grösseren Bedienungsaufwand als solche mit nur einem einzigen Betätigungsorgan.

Bei einem Kipp-Schwenk-Flügel (FR-A-2 330 836) war es schon bekannt, einen einzigen Riegel in eine Schliess-Schwenk- oder Kippstellung zu verschieben. Jedoch ist dieser Beschlag nicht ohne weiteres auf einen Hebe-Schiebe-Kippflügel anwendbar. Die Aufgabe der Erfindung besteht infolgedessen darin, eine Tür bzw. ein Fenster der eingangs genannten Art zu schaffen, dessen Bedienung einfacher und dessen baulicher Aufwand hinsichtlich des Betätigungsmechanismus einfacher und damit auch weniger störanfällig ist.

Zur Lösung dieser Aufgabe wird erfindungsgemäss vorgeschlagen, dass eine Hebe-Schiebe-Kipp-Tür oder -Fenster gemäss dem Anspruch 1 ausgebildet ist. Der Riegel bildet mit dem ersten, beispielsweise tiefer gelegenen Riegelglied eine erste Verriegelungsvorrichtung für den geschlossenen Flügel und mit dem zweiten Verriegelungsglied eine zweite Verriegelungsvorrichtung für die Kippstellung. Damit ist ein Verschieben in keiner dieser beiden Stellungen des Riegels möglich. Das bedeutet, dass der Flügel auch in der beispielsweise zum Lüften nutzbaren Kippstellung einbruchsicher ist. In einer Zwischenstellung, in welcher der Riegel mit keinem der beiden Riegelglieder Kontakt hat, ist der Flügel in der Schieberichtung frei und die Tür oder das Fenster kann dann durch Verschieben des Flügels vollständig geöffnet werden. Das erfordert im Gegensatz zu der bereits vorgeschlagenen Konstruktion keine Kipplage für den Flügel. Gemäss der Aufgabenstellung sind auch keine getrennten Mechanismen für das Umschalten und Freigeben des Flügels in der Schiebestellung erforderlich, weswegen die Handhabung einfacher und die Konstruktion weniger kompliziert ist, was sich selbstverständlich auch in den Herstellungs- und Montagekosten günstig auswirkt.

Gemäss der Erfindung weist der Riegel eine T-förmige Gestalt und jedes Riegelglied einen Einlaufschlitz für den T-Längssteg auf, wobei der T-Quersteg in seinen beiden Endstellungen die den betreffenden Schlitz bildenden Wandungen hintergreift und der Einlaufschlitz für die Verriegelung in der Kippstellung eine der Verschwenkbewegung des Riegels beim Kippen entsprechende Breite aufweist. Letzteres ist erforderlich, weil der Riegel in der Kippstellung gegenüber dem ortsfesten, zweiten Riegelglied zwei winklig gegeneinander versetzte Relativlagen einnimmt und er diese Schwenkbewegung nur durchführen kann, wenn die Schlitzbreite entsprechend ausgeführt ist. Das bedeutet natürlich, dass auch der T-Quersteg demgemäss dimensioniert sein muss, um ein Herausziehen weder in der einen noch in der andern Schwenklage des Riegels zu ermöglichen.

Eine Weiterbildung der Erfindung der Tür oder des Fensters mit einem schubstangenbetätigten Riegel sieht vor, dass sich zwischen den beiden Riegelgliedern eine am feststehenden Rahmen angebrachte, geneigte Abdrückfläche befindet, die mit dem Riegel zusammen eine Abdrückvorrichtung für den Flügel bildet. Die Schubstangenbetätigung des Riegels empfiehlt sich schon deshalb, weil derartige Fenster und Türen ohnehin Schubstangen für die Umschaltung des Beschlags von der einen in die andere Benutzungsart aufweisen. Zieht man nun beispielsweise den Riegel von einer unteren Endstellung, in welcher der Flügel geschlossen ist, nach oben, so trifft er zumindest nach einer kurzen Verschiebestrecke an der geneigten Abdrückfläche des festen Rahmens auf. Verläuft beim genannten Beispiel die Abdrückfläche von unten nach oben in Richtung der Öffnungs-Schiebebewegung des Flügels, so hat das weitere Anheben des Riegels eine Schiebe-Öffnungsbewegung des Flügels zur Folge. Ihr Betrag ist von der Neigung und Länge der Abdrückfläche abhängig.

Der Flügel derartiger Fenster und Türen ist in der Schliesslage gegenüber dem feststehenden Rahmen abgedichtet. Wird nun der Flügel in der vorbeschriebenen Weise zugleich mit dem Anheben auch in öffnendem Sinne geringfügig verschoben, so kommen dadurch sowohl die untere als auch die seitlichen Dichtleisten oder dergleichen der beiden Vertikalholme frei. Dies erleichtert einerseits das nachfolgende Verschieben des Flügels und bewahrt andererseits diese Dichtleisten oder dergleichen vor unnötigem Verschleiss.

Bei einem Fenster oder einer Tür, bei welcher sich das Riegelglied für die Verriegelung in der Schliessstellung unterhalb dem Riegelglied für die Verriegelung in der Kippstellung befindet, besteht eine andere Ausgestaltung der Erfindung darin, dass der Einlaufschlitz des unteren Riegelglieds an seinem vom T-Quersteg des Riegels hintergriffenen hinteren Ende in einer Schrägfläche mündet, die im selben Sinne und etwa unter dem gleichen Winkel geneigt ist wie die Abdrückfläche. Sobald man den Flügel in die Schliessstellung absenkt. bewirkt diese Schrägfläche in Verbindung mit dem Riegel ein Heranziehen des letzteren an den schliessseitigen Vertikalholm des festen Rahmens, d.h. einen Vorgang der umgekehrt abläuft wie der mit Hilfe der Abdrückvorrichtung erzielbare.

Gemäss einer weiteren Ausbildung einer derartigen Tür oder eines Fensters mit einer im wesentlichen aus einem Glockenwinkel und zwei daran angelenkten Laschen bestehenden Eckumlenkung ist vorgesehen, dass der Riegel an der dem vertikalen Flügelholm zugeordneten Lasche angebracht, insbesondere angeformt ist. Bei diesem vertikalen Flügelholm handelt es sich selbstverständlich um den schliessseitigen Vertikalholm des bewegbaren Rahmens. Wenn man den Riegel an dieser Lasche anformt, so beträgt der Aufwand für die Verriegelung in der Schliess- und der Kippstellung zweifellos ein Minimum.

Eine andere Variante einer Tür oder eines Fensters, dessen Beschlag ein Dreistellungsgetriebe mit einer um 180° drehbaren Handkurbel oder dergleichen aufweist und dessen Flügel mittels wenigstens eines Laufwagens auf der Laufschiene abgestützt ist, besteht darin, dass der Hubmechanismus aus einer Hubrolle oder dergleichen des Laufwagens und einem Hubnocken, einer Hubkurve oder dergleichen des Flügels besteht, wobei der der Hubrolle in der Schiebestellung des Beschlags zugeordnete Teil des Hubnockens oder dergleichen gegenüber der Horizontalen nur geringfügig geneigt verläuft, und dass das Getriebe oder die Handkurbel eine in der Schiebestellung des Beschlags einrastbare Sperrvorrichtung besitzt, welche die geringe Rückstellkraft des Flügels aufnimmt. Der Verlauf des Hubnockens oder einer Hubkurve bestimmt nicht nur die einem bestimmten Drehwinkel der Handkurbel zugeordnete Betätigungskraft, sondern auch die vom Flügelgewicht herrührende Rückstellkraft. Ausserdem ist der Kurvenverlauf selbstverständlich auch massgebend für die jeder Winkelstellung der Handkurbel zugeordnete Hublage des Flügels. Im Falle der vorbeschriebenen Ausgestaltung ist es nun so, dass der Flügel innerhalb etwa der ersten 90°-Drehung der Handkurbel oder dergleichen weitgehend angehoben wird und die zweite 90°-Drehung nur noch eine geringe zusätzliche Anhebung des Flügels herbeiführt. Anderseits erreicht man aber durch die besondere Ausbildung des Hubnockens, der Hubkurve oder dergleichen, dass die aus dem Gewicht des Flügels herrührende Rückstellkraft zumindest in der 90°-Mittelstellung des Dreistellungsgetriebes, vorzugsweise aber auch in der Kippstellung des Beschlags, nur einen relativ kleinen Wert annimmt. Diese Kraft kann leicht von einer einrastbaren Sperrvorrichtung des Getriebes oder der Handkurbel aufgenommen werden. Die Ein- und die Ausrastung in der 90°-Stellung der Handkurbel erfolgen jeweils automatisch, d.h. die Betätigung beispielsweise eines Auslösemechanismus ist nicht erforderlich. Umgekehrt ermöglicht diese z.B. federbelastete Verrastung die Verwendung eines Betätigungsmechanismus ohne Kraftentlastung oder gar Kraftumkehr.

Die bei einem bogenförmigen, stetigen Verlauf des Hubnockens oder der Hubkurve vorhandene, noch etwas geringere Rückstellkraft des Flügels in der 180°-Drehstellung der Handkurbel kann leicht von einer Feder des Getriebes oder des Umschaltmechanismus aufgenommen werden, so dass es dort keiner besonderen Ein- und Ausrastung bedarf. An sich könnte man den Beschlag so ausbilden, dass in der 180°-Drehstellung der Handkurbel keine Rückstellkraft mehr auftritt, jedoch führt das zu einer völligen Entlastung des Beschlags, die aus verschiedenen Gründen unerwünscht ist.

Eine andere zweckmässige Ausführungsform einer derartigen Tür oder eines Fensters mit wenigstens einem Ausstellarm am oberen Flügelende besteht darin, dass der Ausstellarm zumindest einen winkel- oder bogenförmigen Führungsschlitz für einen schubstangenbetätigten Führungsbolzen oder dergleichen aufweist, der beim Umschalten von der Verriegelungs- in die Verschiebestellung entlang einem Bogenteilstück oder Winkelschenkel bewegbar ist, der gegenüber der Flügelebene lediglich flach geneigt verläuft. Vorstehend wurde bereits erläutert, dass bei einem Anheben des Flügels aufgrund der Abdrückvorrichtung die Dichtungen am unteren Querholm sowie den beiden Vertikalholmen freikommen. Wenn man nun den Ausstellarm oder eine Ausstellschere in der vorbeschriebenen Weise ausbildet, so erreicht man zusätzlich auch noch eine Entlastung der Dichtung des oberen Rahmenendes. Ein besonderer Aufwand ist dazu nicht erforderlich, da ein Kippflügel zumindest einer Ausstellschere oder eines Ausstellrahmens bedarf. Letzterer muss also lediglich in vorteilhafter Weise gestaltet und entsprechend montiert sein, um ein kräftearmes und dichtungsschonendes Verschieben des Flügels zu ermöglichen.

In der Zeichnung ist ein Ausführungsbeispiel der Erfindung dargestellt. Es zeigen:

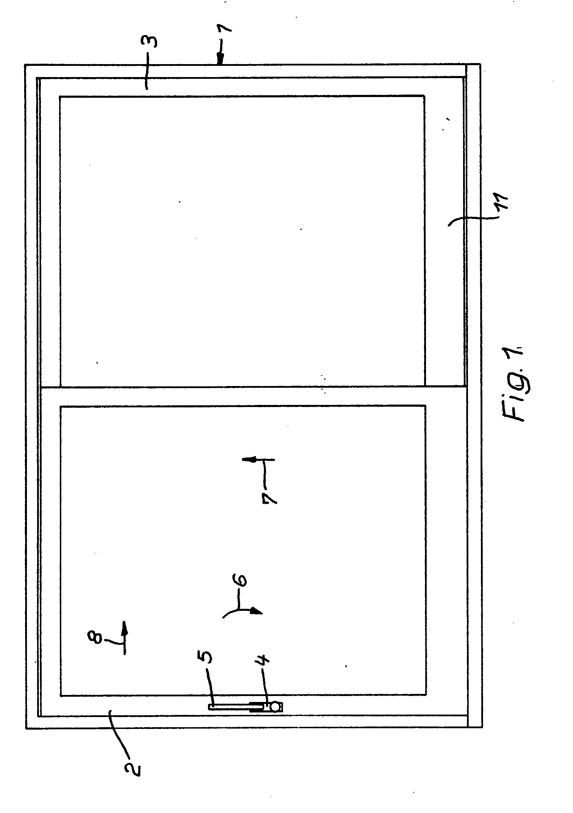

Fig. 1 eine Vorderansicht der Tür oder des Fensters bei geschlossenem Flügel,

Fig. 2 teilweise vertikal geschnitten in vergrössertem Massstab, einen Ausschnitt aus der linken unteren Ecke der Fig. 1 in der Schliessstellung des Beschlags,

Fig. 3 eine der Fig. 2 entsprechende Darstellung in der Schiebestellung des Beschlags,

Fig. 4 eine weitere der Fig. 2 entsprechende Darstellung, jedoch mit dem Beschlag in der Kippstellung,

Fig. 5 perspektivisch eine Einzelheit der Fig. 2 in der Schiebestellung des nicht gezeigten Flügels,

Fig. 6 eine abgebrochene Draufsicht auf den Flügel mit geschnittenem, schliessseitigem Vertikalholm des festen Rahmens.

Der Einfachheit halber wird nachfolgend nur noch von einer Hebe-Schiebe-Kipp-Tür gesprochen, obwohl die Erfindung auch für ein Hebe-Schiebe-Kippfenster geeignet ist. Die Hebe-Schiebe-Kipp-Tür besitzt einen festen Rahmen 1, einen bewegbaren Flügel 2 und ein dazu parallel etwas versetztes, festes Feld 3, vor welches der bewegbare Flügel in seiner Schiebestellung treten kann. Anstelle des festen Feldes kann auch ein zweiter schiebbarer Flügel vorgesehen werden. Ein Dreistellungsgetriebe 4 mit einer Handkurbel 5 dient zur Betätigung des Beschlags, d.h. zum Umschalten von der Schliess- in die Schiebe- und in die Kippstellung bzw. umgekehrt. In der Schliessstellung des Beschlags bzw. des bewegbaren Flügels 2 zeigt die Handkurbel beispielsweise nach oben. Dreht man sie im Sinne des Pfeils 6 um 90°, so erreicht man die Schiebestellung. Dabei wird gemäss den nachfolgenden Ausführungen der Flügel in Richtung des Pfeils 7 etwas angehoben, ausserdem im Sinne des Pfeils 8 um einen geringen Betrag verschoben und schliesslich um einen minimalen Betrag gekippt, so dass ringsum sämtliche Dichtungen freikommen. Dreht man die Handkurbel 5 im Sinne des Pfeils 6 um weitere 90°, wodurch ihr freies Ende nunmehr nach unten zeigt, so erreicht man die Kippstellung des Beschlags bzw. des bewegbaren Flügels 2. In der Kippstellung kann der Flügel nicht verschoben werden, es sei denn, man verschiebt ihn vor dem Umschalten in die Kippstellung. Infolgedessen ist die Tür normalerweise auch in der Kippstellung einbruchsicher. Demnach wird der Flügel 2 beim Anheben zugleich auch um einen geringfügigen Betrag in Schieberichtung geöffnet, wodurch die nicht dargestellten Dichtungen an der Unterseite und den beiden Vertikalseiten des Flügels freikommen. Durch eine geeignete Ausbildung der Ausstellvorrichtung wird gemäss der nachfolgenden Erläuterung beim Anheben des Flügels auch die obere Dichtung freigestellt.

Der bewegbare Flügel 2 ist mittels beispielsweise zweier Laufwagen 9 auf einer Laufschiene 10 des unteren Horizontalholm 11 verschieb- und kippbar abgestützt. Zu diesem Zwecke besitzt jeder Laufwagen zwei in Verschieberichtung hintereinander angeordnete Laufräder 12, deren Profil in Verbindung mit dem Laufschienenprofil das Verschieben und Kippen zulässt.

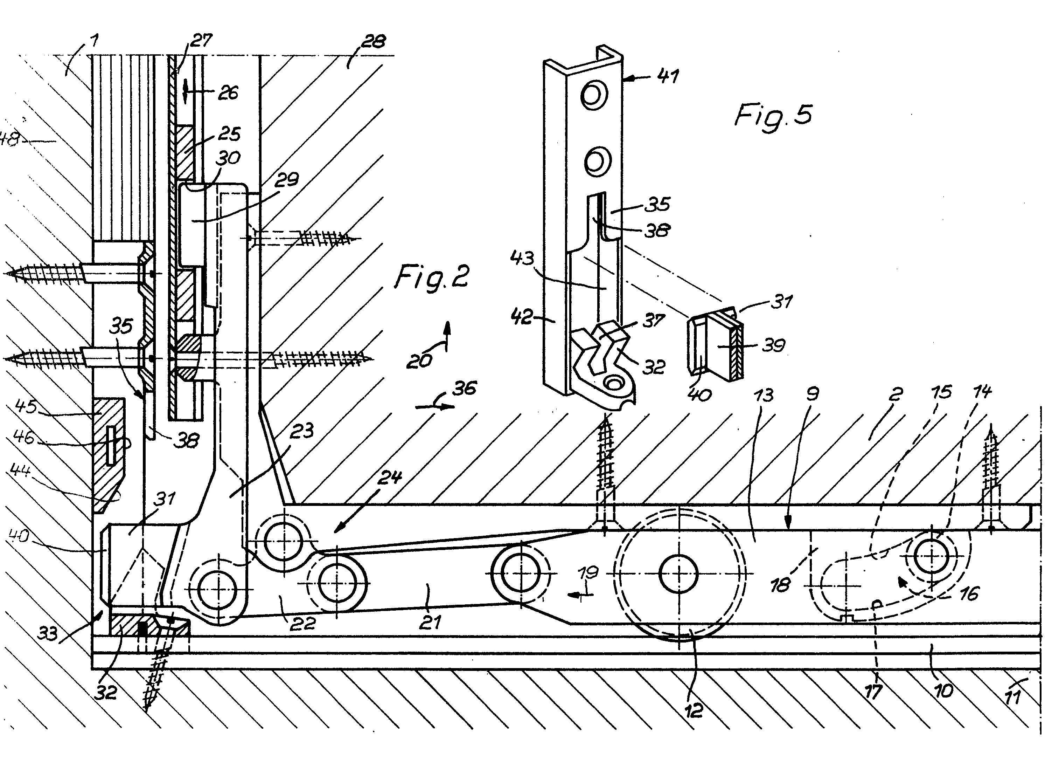

Zwischen zwei Seitenblechen 13 des Laufwagens 9 ist eine Hubrolle 14 eingesetzt, die mit einem Hubnocken 15 des bewegbaren Flügels 2 zusammen einen Hubmechanismus 16 bildet. Der Hubnocken stellt zugleich die in Fig. 2 obere Begrenzung eines Führungsschlitzes 17 eines am unteren Horizontalholm des bewegbaren Flügels 2 anmontierten Beschlagteils 18 dar. Die Krümmung dieses Führungsschlitzes und damit auch der Verlauf des Hubnockens 15 ist so gewählt, dass der bewegbare Flügel 2 – ausgehend von der Schliessstellung – während der ersten 90°-Drehung der Handkurbel 5 relativ stark und während der zweiten 90°-Drehung nur noch vergleichsweise gering angehoben wird. Infolgedessen verläuft der in der 90°-Stellung des Beschlags, welche zugleich die Verschiebestellung des bewegbaren Flügels ist, an der Hubrolle 14 anliegende Teil des Hubnockens relativ flach zur Horizontalen bzw. zur Längsachse der Laufschiene 10. Deshalb wirkt auf diesen Beschlag in der Mittel- oder Verschiebestellung nur eine verhältnismässig geringe Rückstellkraft ein. In der Kippstellung des Beschlags befindet sich die Hubrolle 14 am linken Ende des Führungsschlitzes 17 bzw. des Hubnockens 15. An dieser Stelle verläuft der Hubnocken unter einem noch geringeren Winkel zur Horizontalen, weswegen die aus dem Flügelgewicht herrührende Rückstellkraft in der Kippstellung noch kleiner ist. Sie wird in bekannter Weise von einer Feder im Dreistellungsgetriebe aufgenommen. In der Mittelstellung des Beschlags, in welcher die Hubrolle 14 etwa der Hubnockenmitte zugeordnet ist, wird die vom Flügel ausgeübte Rückstellkraft von einer einrastbaren, nicht gezeigten Sperrvorrichtung des Getriebes oder der Handkurbel aufgenommen. Die Einrastung erfolgt automatisch und beim Weiterdrehen der Kurbel von der 90°- in die 180°-Drehstellung wird auch selbsttätig wieder ausgerastet. Aus dem Vorstehenden ergibt sich, dass ein Verschieben der Laufwagen 9 gegenüber dem bewegbaren Flügel 2 in Pfeilrichtung 19 ein Anheben des Flügels in Richtung des Pfeils 20 zur Folge hat.

Der schliessseitige Laufwagen 9 ist über eine erste Lasche 21, einen Glockenwinkel 22 und eine zweite Lasche 23, welche zusammen eine Eckumlenkung 24 bilden, mit einer Schubstange 25 am schliessseitigen Vertikalholm 28 des bewegbaren Flügels 2 gekuppelt. Die Schubstange 25 ist im Sinne des Doppelpfeils 26 in einer Profilschiene 27 gelagert. Sie besitzt eine Ausnehmung 30, in welche ein Ansatz 29 am freien Ende der zweiten Lasche 23 eingreift.

An ihrem unteren, am Glockenwinkel 22 angelenkten Ende trägt die zweite Lasche 23 einen insbesondere angeformten Riegel 31. Er bildet mit einem an der schliessseitigen unteren Ecke des festen Rahmens 1 angebrachten unteren Riegelglied 32 eine untere Verriegelungsvorrichtung 33. Ausserdem wirkt er noch mit einem oberen Riegelglied 35 zusammen, welches am schliessseitigen vertikalen Holm des festen Rahmens 1 in einem Abstand vom unteren Riegelglied 32 angeschraubt ist. Das obere Riegelglied 35 und der Riegel 31 bilden zusammen eine obere Verriegelungsvorrichtung 34.

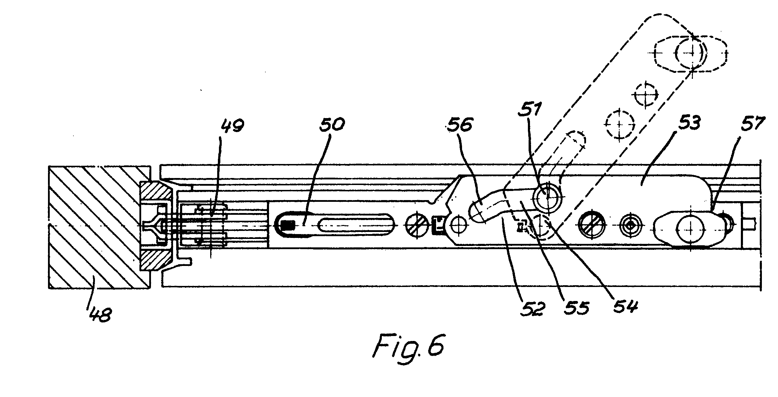

Der Riegel 31 hat eine T-förmige Gestalt mit einem T-Längssteg 39 (Fig. 5) und einem T-Quersteg 40. Ersterer durchsetzt in der Schliessstellung des Beschlags und des bewegbaren Flügels 2 einen Einlaufschlitz 37 des unteren Riegelglieds 32. In der oberen Stellung des Riegels, d. h. in der Kippstellung des Beschlags durchsetzt der T-Längssteg 39 einen Einlaufschlitz 38 des oberen Riegelglieds 35. Der T-Quersteg 40 hintergreift in beiden Fällen das betreffende Riegelglied 32 bzw. 35. Ausserdem lässt sich beispielsweise der Fig. 2 gut entnehmen, dass das untere Riegelglied 32 an seinem inneren Ende mit einer abfallenden Schräge versehen ist, welche den bewegbaren Flügel 2 beim Übergang von der Schiebe- in die Schliessstellung entgegen dem Pfeil 36 verschiebt, und zwar im Zusammenwirken mit dem T-Quersteg 40. Dadurch wird dann der schliessseitige Vertikalholm 28 gegen den schliessseitigen Vertikalholm 48 des festen Rahmens 1 gezogen, wodurch auch die Dichtungen wieder zur Anlage an den Gegendichtflächen kommen.

Das obere Riegelglied 35 wird durch das Mittelstück eines im Querschnitt U-förmigen Bauteils 41 gebildet, dessen beide U-Schenkel zur Bildung von Schutzlappen 42 und 43 nach unten hin verlängert sind und dadurch eine als Einbruchsicherung wirkende Aufnahme für das innere Ende des unteren Riegelglieds 32 bilden.

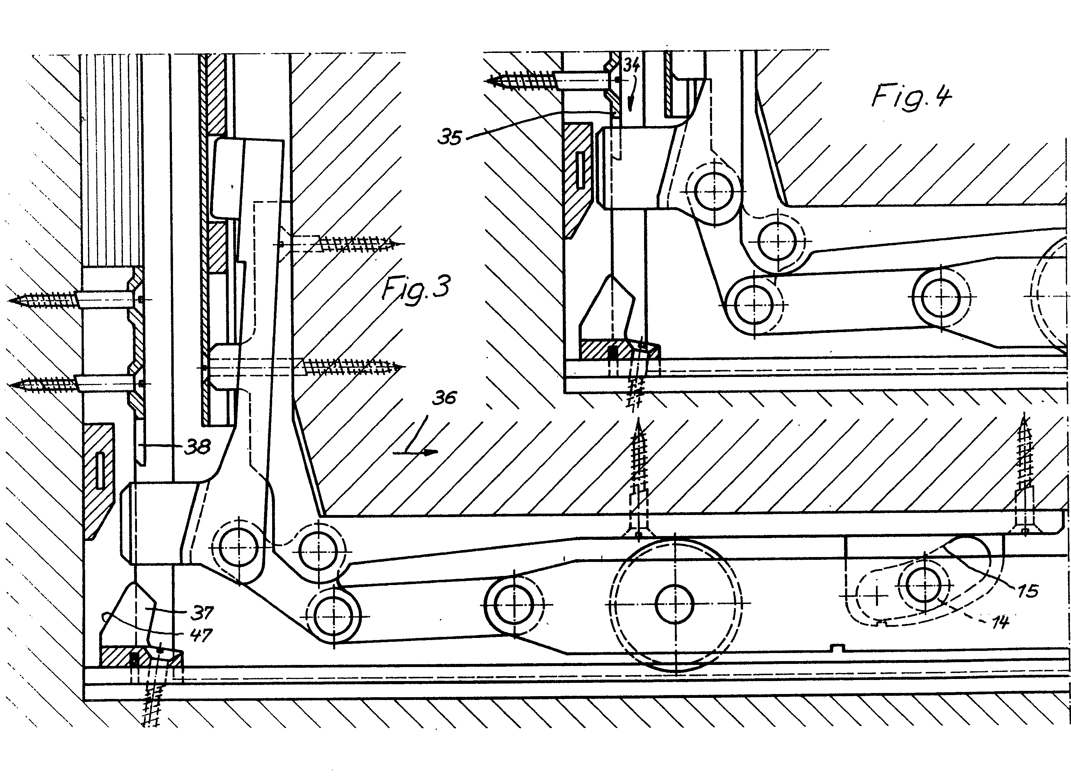

Zwischen dem unteren Riegelglied 32 und dem oberen Riegelglied 35 ist am schliessseitigen Vertikalholm 48 des festen Rahmens 1 eine Abdrückplatte 45 anmontiert. Sie besitzt eine Abdrückfläche 44, welche in gleichem Sinne geneigt ist wie die erwähnte innere Schrägfläche des unteren Riegelglieds 32. Wenn der Riegel 31 beim Umschalten des Beschlags von der Schliess- in die Schiebestellung eine Aufwärtsbewegung durchführt, so trifft er am unteren, innen gelegenen Ende der Abdrückfläche 44 auf. Bei weiterem Hochheben des Riegels 31 bewirkt die Abdrückfläche 44 eine Verschiebung des bewegbaren Flügels 2 in Pfeilrichtung 36, welche der Hubbewegung überlagert wird. Durch diese geringe Öffnung in Schieberichtung kommen sowohl die Dichtungen der beiden Vertikalholme als auch des unteren Horizontalholms frei. Ausserdem erfolgt, wie bereits angedeutet und nachfolgend noch detaillierter beschrieben, zugleich auch eine minimale Kippbewegung des Flügels, welche die Dichtung an der vierten Seiten, nämlich an den oberen Holmen, freistellt. Damit kann der bewegbare Flügel 2 ohne Beeinträchtigung durch die Dichtungen verschoben werden. Anderseits werden die Dichtungen bei der Verschiebebewegung nicht unnötig beansprucht. Beim Schliessen des Flügels aus der verschobenen Stellung kann die vordere Fläche 46 als Puffer dienen (Fig. 3), wobei sie mit der zugekehrten Fläche des T-Querstegs 40 zusammenwirkt.

Die Bewegung der Schubstange 25 wird über eine obere Eckumlenkung 49 auf eine obere Schubstange 50 übertragen. Diese trägt einen Führungsbolzen 51, der in der Art eines Kulissensteins in einen Führungsschlitz 52 eines Ausstellarms 53 eingreift. Letzterer ist um eine Achse 54 drehbar am oberen Querholm des bewegbaren Flügels 2 gelagert.

Der Führungsschlitz 52 besitzt eine winkelförmige Gestalt, wobei der eine Winkelschenkel 55 zur Flügelebene leicht geneigt ist, während der andere Winkelschenkel 56 eine stärkere aber gleichsinnige Neigung zur Flügelebene aufweist. Während der ersten 90°-Drehung der Handkurbel, d.h. beim Übergang von der Verriegelungs- in die Verschiebestellung wandert der Führungsbolzen 51 entlang dem einen Winkelschenkel 55. Aufgrund der geringen Schrägstellung desselben bewirkt dies ein geringfügiges Abdrücken des oberen Flügelendes vom oberen Vertikalholm des festen Rahmens, so dass auch an dieser Stelle die Dichtung freikommt. Die eigentliche Schrägstellung des Flügels erfolgt beim Eintritt des Führungsbolzens 51 in den anderen Winkelschenkel 56, wobei dann die mit gestrichelten Linien gezeigte Relativlage des Ausstellarms 53 gegenüber dem Flügel erreicht wird. An seinem von der Drehachse 54 abgewandten Ende trägt der Ausstellarm ein Gleitstück 57, welches in einer nicht gezeigten Führungsschiene des festen Rahmens 1 verschiebbar ist. Die Tür kann durchaus mehr als eine derartige Ausstellvorrichtung aufweisen.

## Patentansprüche

1. Hebe-Schiebe-Kipp-Tür oder -Fenster mit einem in der Schliess- sowie in der Kippstellung gegen Verschieben verriegelbaren Flügel, wobei ein Riegel (31) in der einen Schiebeendstellung bei geschlossenem Flügel (2) mit einem ersten (32) und in der anderen Schiebeendstellung bei gekipptem Flügel mit einem zweiten das Verschieben verhindernden Riegelglied (35) zusammenwirkt, während seine etwa mittlere Verschiebestellung eine Verschiebe-Freigabestellung für den in Schiebestellung befindlichen Flügel ist und der Riegel (31) eine T-förmige Gestalt und jedes Riegelglied (32, 35) einen Einlaufschlitz (37, 38) für den T-Längssteg (39) aufweist, wobei der T-Quersteg (40) in seinen beiden Endstellungen die den betreffenden Schlitz bildenden Wandungen hintergreift und der Einlaufschlitz (38) für die Verriegelung in der Kippstellung eine der Schwenkbewegung des Riegels beim Kippen entsprechende Breite aufweist.

2. Tür oder Fenster nach Anspruch 1 mit einem schubstangenbetätigten Riegel, dadurch gekennzeichnet, dass sich zwischen den beiden Riegelgliedern (32, 35) eine am feststehenden Rahmen (1) angebrachte, geneigte Abdrückfläche (44) befindet, die mit dem Riegel (31) zusammen eine Abdrückvorrichtung für den Flügel (2) bildet.

3. Tür oder Fenster nach Anspruch 2, bei welcher sich das Riegelglied für die Verriegelung in der Schliessstellung unterhalb des Riegelglieds für die Verriegelung in der Kippstellung befindet, dadurch gekennzeichnet, dass der Einlaufschlitz (37) des unteren Riegelglieds (32) an seinem vom T-Quersteg (40) des Riegels (31) hintergriffenen hinteren Ende in einer Schrägfläche (47) mündet, die im selben Sinne und etwa unter dem gleichen Winkel geneigt ist wie die Abdrückfläche (44).

4. Tür oder Fenster nach einem oder mehreren der vorhergehenden Ansprüche mit einer im wesentlichen aus einem Glockenwinkel und zwei daran angelenkten Laschen bestehenden Eckumlenkung, dadurch gekennzeichnet, dass der Riegel (31) an der dem schliessseitigen vertikalen Flügelholm (28) zugeordneten Lasche (23) angebracht, insbesondere angeformt ist.

5. Tür oder Fenster nach einem oder mehreren der vorhergehenden Ansprüche, dessen Beschlag ein Dreistellungsgetriebe mit einer um etwa 180° drehbaren Handkurbel oder dergleichen aufweist und dessen Flügel mittels wenigstens eines Laufwagens auf der Laufschiene abgestützt ist, dadurch gekennzeichnet, dass der Hubmechanismus aus einer Hubrolle (14) oder dergleichen des Laufwagens (9) und einem Hubnocken (15), einer Hubkurve oder dergleichen des Flügels (2) besteht, wobei der der Hubrolle in der Schiebestellung des Beschlags zugeordnete Teil des Hubnockens oder dergleichen gegenüber der Horizontalen nur geringfügig geneigt verläuft, und dass das Getriebe (4) oder die Handkurbel (5) eine in der Schiebestellung des Beschlags einrastbare Sperrvorrichtung besitzt, welche die geringe Rückstellkraft des Flügels aufnimmt.

6. Tür oder Fenster nach einem oder mehreren der vorhergehenden Ansprüche mit wenigstens einem Ausstellarm am oberen Flügelende, dadurch gekennzeichnet, dass der Ausstellarm (53) zumindest einen winkel- oder bogenförmigen Führungsschlitz (52) für einen schubstangenbetätigten Führungsbolzen (51) oder dergleichen aufweist, der beim Umschalten von der Verriegelungs- in die Verschiebestellung entlang dem einen Bogenteilstück oder Winkelschenkel (55) bewegbar ist, der gegenüber der Flügelebene lediglich flach geneigt verläuft.

**Claims**

1. Raising-sliding-tilting door or window having a leaf or sash capable of being locked in the closed or immovably in the tilted position, a bolt (31) co-operating with a first lock member (32) when the leaf or sash (2) is closed in one extreme position relating to the sliding action, and with a second lock member (35) which prevents displacement when the leaf or sash is tilted and in the other extreme position, an approximately central position of displacement of the leaf or sash representing a movement releasing position for the leaf or sash which is in the sliding position, the bolt (31) having a T-shaped form and each lock member (32, 35) having a slot (37, 38) to receive the shank (39) of the T-shaped member, the cross-bar (40) of the T-shaped member, in its two extreme positions, engaging behind the walls which form the relevant slot, the slot (38), to perform the locking function in the tilted position, having a width corresponding to the pivoting movement of the lock during tilting.

2. Door or window according to claim 1 having a push rod operated bolt, characterised in that between the two lock members (32, 35) and mounted on the fixed frame (1) there is an inclined pressure area (44) which, together with the bolt (31), forms a device against which the leaf or sash (2) can press.

3. Door or window according to claim 2, in which the lock member for locking the leaf or sash in the closed position is disposed below the lock member which locks the leaf or sash in the tilted position, characterised in that the slot (37) intended to receive the lower lock member (32), at its rear end behind which engages the T-bar (40) of the bolt (31), terminates in an inclined face (47) which is ' inclined in the same direction and approximately at the same angle as the pressure face (44).

4. Door or window according to one or more of the preceding claims, with a corner deflector consisting substantially of a bell-shaped angle member and two side plates articulated thereon, characterised in that the bolt (31) is mounted and is in particular integrally moulded on the side plate (23) which is associated with the vertical pillar (28) which is on the closure side.

5. Door or window according to one or more of the preceding claims, the furniture on which comprises a three-position gearing with a crank handle or the like rotatable through about 180°, and the leaf or sash of which is supported by at least one carriage so that it can run on the track, characterised in that the lifting mechanism consists of a lifting roller (14) or the like on the carriage (9) and a lifting cam (15), cam plate or the like on the leaf or sash (2), that part of the lifting cam or the like which is associated with the lifting roller in the sliding position of the furniture extending at a very slight angle of inclination to the horizontal, and in that the gear mechanism (4) or the crank handle (5) has a locking device which clicks into engagement in the sliding position of the furniture and which absorbs the negligible restoring force of the leaf or sash.

6. Door or window according to one or more of the preceding claims with at least one push-out arm at the upper end of the leaf or sash, characterised in that the push-out arm (53) has at least one angular or arcuate guide slot (52) to receive a push rod operated guide pin (51) or the like which, upon switch-over from the locking to the displacement position, can be· moved along that angled or arcuate part (55) which extends at only a flat angle in relation to the plane of the leaf or sash.

**Revendications**

1. Porte ou fenêtre soulevable-coulissante-basculante, comprenant un vantail susceptible d'être verrouillé contre le coulissement dans la position de fermeture ainsi que dans la position de basculement, dans laquelle un verrou (31) coopère avec un premier organe de verrouillage (32), dans une position extrême de coulissement, lorsque le vantail (2) est fermé, et avec un deuxième organe de verrouillage (35) qui interdit le coulissement, dans l'autre position extrême de coulissement dans laquelle le vantail est basculé, cependant que sa position à peu près médiane de coulissement est une position de libération du coulissement pour le vantail qui se trouve en position de coulissement, et ce verrou (31) a une configuration en forme de T, chaque organe de verrouillage (32, 35) comportant une fente d'entrée (37, 38) pour recevoir la barre longitudinale (39) du T cependant que la barre transversale (40) de ce T est engagée, dans ces deux positions extrêmes, derrière les parois qui forment la fente correspondante et que la fente d'entrée (38) de verrouillage dans la position de basculement a une largeur qui correspond au déplacement d'oscillation du verrou lors du basculement.

2. Porte ou fenêtre suivant la revendication 1, munie d'un verrou actionné par une barre de poussée, caractérisée en ce que, entre les deux organes de verrouillage (32, 35) se trouve une surface de dégagement inclinée, montée sur le châssis fixe (1), qui forme avec le verrou (31) un dispositif de dégagement pour le vantail (2).

3. Porte ou fenêtre suivant la revendication 2, dans laquelle l'organe de verrouillage prévu pour le verrouillage dans la position de fermeture se trouve au-dessous de l'organe de verrouillage prévu pour le verrouillage dans la position de basculement, caractérisée en ce que la fente d'entrée (37) de l'organe de verrouillage inférieur (32) débouche à son extrémité arrière, derrière laquelle s'engage la barre transversale (40) du T du verrou (31), dans une surface oblique qui est inclinée dans le même sens et à peu près du même angle que la surface de dégagement.

4. Porte ou fenêtre suivant l'une des revendications précédentes, comportant un renvoi d'angle essentiellement composé d'un levier coudé et de deux biellettes articulées sur ce levier, caractérisée en ce que le verrou (31) est fixé notamment venu de matière, sur la biellette (23) combinée au montant vertical, côté fermeture, (28) du vantail.

5. Porte ou fenêtre suivant l'une des revendications précédentes, dont la ferrure comporte un mécanisme à trois positions muni d'une manivelle ou équivalent susceptible de tourner d'environ 180° et dont le vantail est supporté par un rail au moyen d'au moins un chariot, caractérisée en ce que le mécanisme élévateur est composé d'un galet élévateur (14) ou équivalent du chariot (9) et d'une saillie élévatrice (15), d'une came élévatrice ou d'un autre moyen équivalent du vantail (2), la partie de la saillie élévatrice ou équivalent qui est associée au galet élévateur dans la position de coulissement de la ferrure n'étant que légèrement inclinée par rapport à l'horizontale, et en ce que le mécanisme (4) ou la manivelle (5) comporte un dispositif de blocage pouvant être verrouillé dans la position de coulissement de la ferrure et absorbant la légère force de rappel du vantail.

6. Porte ou fenêtre suivant l'une des revendications précédentes, comportant au moins un bras de dégagement sur l'extrémité supérieure du vantail, caractérisée en ce que le bras de dégagement (53) comporte au moins une fente de guidage (52) de forme coudée ou incurvée, pour un ergot de guidage (51), ou équivalent qui est actionné par une barre de poussée et qui, lors de passage de la position de verrouillage à la position de coulissement, peut se déplacer le long d'une partie de l'arc ou d'une branche (55) du coude qui n'est que très légèrement incliné par rapport au plan du vantail.

Fig. 1

Fig.5

Fig.2

Fig. 4

Fig. 3

Fig.6